Europäisches Patentamt

European Patent Office

Office européen des brevets

(11) Numéro de publication: **0 547 947 B1**

(12) **FASCICULE DE BREVET EUROPEEN**

(45) Date de publication de fascicule du brevet: **26.04.95** (51) Int. Cl.6: **F16H 39/02**, B60K 17/356

(21) Numéro de dépôt: **92403367.3**

(22) Date de dépôt: **11.12.92**

(54) **Engin mobile comportant des moteurs hydrauliques avant et arrière d'entraînement.**

(30) Priorité: **19.12.91 FR 9115825**

(43) Date de publication de la demande:
**23.06.93 Bulletin 93/25**

(45) Mention de la délivrance du brevet:
**26.04.95 Bulletin 95/17**

(84) Etats contractants désignés:
**DE GB**

(56) Documents cités:
**WO-A-89/12558**
**FR-A- 2 199 836**
**US-A- 3 250 340**

(73) Titulaire: **POCLAIN HYDRAULICS, Société Anonyme**
**Route de Saint Sauveur,**
**B. P. 106**
**F-60411 Verberie Cédex (FR)**

(72) Inventeur: **Fontaine, Jacques**
**33 rue du Port**
**F-60410 Verberie (FR)**
Inventeur: **Cousin, Jean-Claude R.**
**289 rue Mac Hugh**
**F-60700 Pontpoint (FR)**

(74) Mandataire: **Hoisnard, Jean-Claude et al**
**Cabinet Beau de Loménie**
**158, rue de l'Université**
**F-75340 Paris Cédex 07 (FR)**

## Description

WO-A-8 912 558 représente un engin mobile comportant un groupe d'organes de déplacement avant et un groupe d'organes de déplacement arrière, les organes de déplacement de chaque groupe étant attelés à des groupes de moteurs hydrauliques avant et arrière, respectivement, qui sont munis de premiers raccords principaux et de deuxièmes raccords principaux et qui sont reliés à une pompe principale cependant que le groupe des moteurs hydrauliques arrière possède des première et deuxième cylindrées séparées; que les premiers raccords principaux du groupe des moteurs hydrauliques avant et de la première cylindrée du groupe des moteurs hydrauliques arrière sont raccordés en parallèle depuis la pompe principale, par des premiers tronçons de conduit d'alimentation, eux-mêmes reliés à la pompe principale; et que la cylindrée du groupe des moteurs hydrauliques avant est susceptible d'entraîner les organes de déplacement avant à une vitesse linéaire égale à celle d'entraînement des organes de déplacement arrière par la deuxième cylindrée du groupe des moteurs hydrauliques arrière.

Dans cet engin connu, lorsque les divers moteurs sont alimentés, ils le sont par un circuit d'alimentation en parallèle, ce qui peut conduire à la configuration dans laquelle l'un des groupes d'organes de déplacement patinant sur le sol, le fluide refoulé par la pompe principale n'alimente plus que les moteurs accouplés auxdits organes de déplacement qui patinent, avec pour conséquence l'immobilisation de l'engin.

US-A-3 250 340 prévoit une disposition permettant de remédier à l'inconvénient du patinage, en réalisant l'alimentation en fluide des moteurs arrière par le fluide s'échappant des moteurs avant.

Cette disposition antérieure présente cependant un inconvénient: le couple d'entraînement des roues arrières est au plus égal au couple d'entraînement des roues avant, ce qui est parfois considéré comme étant insuffisant.

L'invention entend remédier aux imperfections constatées en proposant une solution qui, à la fois, évite les risques de patinage et permet le choix des valeurs des couples d'entraînement des divers groupes d'organes de déplacement.

Pour ce faire, dans l'engin décrit en premier, selon l'invention le premier raccord principal de la deuxième cylindrée du groupe des moteurs hydrauliques arrière est séparé de celui de la première cylindrée du groupe des moteurs hydrauliques arrière et est relié, par un conduit de liaison, au deuxième raccord principal du groupe des moteurs hydrauliques avant, et le premier raccord principal de la première cylindrée du groupe des moteurs hydrauliques arrière est directement relié à la pompe principale sans qu'une cylindrée du groupe des moteurs hydrauliques avant ne soit raccordée en série entre la pompe principale et la première cylindrée du groupe des moteurs hydrauliques arrière.

Les dispositions complémentaires suivantes sont en outre de préférence adoptées:

- un distributeur à deux positions est placé sur le premier tronçon de conduit d'alimentation de la première cylindrée du groupe des moteurs hydrauliques arrière, et, dans sa première position, établit la continuité dudit premier tronçon de conduit d'alimentation, interrompant dans sa deuxième position la continuité dudit premier tronçon de conduit d'alimentation;

- l'engin comporte un conduit d'échappement relié aux deuxièmes raccords principaux du groupe des moteurs hydrauliques arrière et un conduit de dérivation reliant le conduit d'échappement audit distributeur à deux positions, qui, dans sa première position obture ledit conduit de dérivation, et qui, dans sa deuxième position met en communication le conduit de dérivation avec la partie du premier tronçon de conduit d'alimentation qui est en communication permanente avec le premier raccord principal de la première cylindrée du groupe des moteurs hydrauliques arrière;

- l'engin comporte une source de fluide de gavage, à laquelle est relié, par un conduit de gavage, le conduit de liaison, un clapet de non retour étant placé sur le conduit de gavage et permettant le passage d'un fluide de la source de fluide de gavage vers le conduit de liaison, et, un conduit d'échappement relié aux deuxièmes raccords principaux des première et deuxième cylindrées du groupe des moteurs hydrauliques arrière, auquel est raccordé un conduit de décharge raccordé par ailleurs audit conduit de liaison, cependant qu'un clapet de décharge de protection contre les surpressions est placé sur ledit conduit de décharge;

- l'engin comporte un conduit d'échappement relié aux deuxièmes raccords principaux du groupe des moteurs hydrauliques arrière, une commande de direction, et un conduit d'équilibrage, qui relie le conduit de liaison au conduit d'échappement, cependant qu'un distributeur à ouverture progressive est placé sur ce conduit d'équilibrage, est placé normalement dans une première position dans laquelle il interrompt la continuité dudit conduit d'équilibrage et est muni d'un dispositif de réglage de sa position, qui est attelé à la commande de direction, celle-ci commandant l'ouverture progressive dudit distributeur à ouverture progressive, de manière, lors d'un virage de l'engin, à permettre le passage contrôlé de fluide en provenance de, ou vers le conduit de liaison.

L'avantage principal de l'invention réside dans la simplicité et dans l'efficacité des moyens proposés, qui, en éliminant le risque de patinage, réalisent en outre un avantageux report de couple sur les organes de déplacement exempts de glissement avec le sol.

L'invention sera mieux comprise, et des caractéristiques secondaires et leurs avantages apparaîtront au cours de la description de réalisations donnée ci-dessous à titre d'exemple.

Il est entendu que la description et les dessins ne sont donnés qu'à titre indicatif et non limitatif.

Il sera fait référence aux dessins annexés, dans lesquels :

- les figures 1 et 2 représentent les circuits d'alimentation des groupes de moteurs avant et arrière de deux réalisations distinctes d'engins conformes à l'invention ; et,
- la figure 3 constitue le graphique de correspondance précisant un exemple de réalisation d'un élément constitutif du circuit de la figure 2.

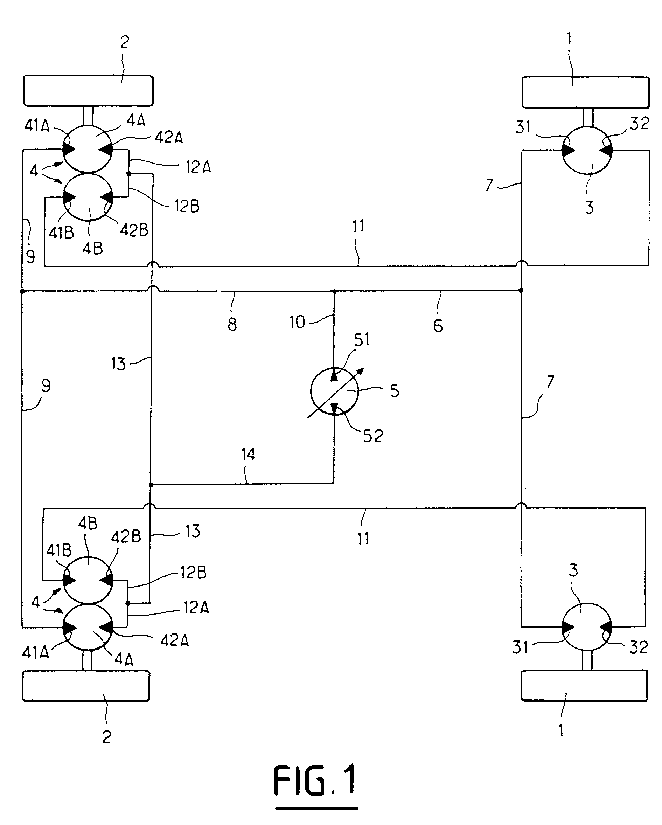

Le circuit de la figure 1 se rapporte à l'entraînement des roues avant 1 et des roues arrière 2 d'un engin mobile au moyen de moteurs hydrauliques 3 et 4, respectivement.

Les groupes de moteurs hydrauliques arrière 4 attelés à chaque groupe de roues arrière, droite et gauche, ont deux cylindrées distinctes, schématisées par des moteurs 4A, 4B. La valeur de chaque deuxième cylindrée d'un moteur 4B est égale à C4B, et égale aussi à la cylindrée C3 de chaque moteur 3 :

C4B = C3.

La valeur C4A de chaque première cylindrée d'un moteur 4A est, en ce qui concerne la présente invention, indépendante de la valeur C4B.

Tous les moteurs sont réversibles et sont munis de deux raccords principaux : 31, 32 des moteurs 3 ; 41A, 42A des moteurs 4A ; et 41B, 42B des moteurs 4B.

L'alimentation en fluide sous pression des divers moteurs est réalisée par une pompe à débit variable 5, munie également de deux raccords principaux 51, 52. Un conduit 6 relie un conduit 7 raccordé au raccord 31 de chaque moteur 3, à un conduit 10, relié lui-même au raccord 51 de ladite pompe. Un conduit 8 relie un conduit 9 raccordé au raccord 41A de chaque moteur 4A au conduit 10. Un conduit de liaison 11 relie le raccord 32 du moteur 3 attelé à la roue avant droite au raccord 41B du moteur 4B attelé à la roue arrière droite. De manière analogue, un autre conduit de liaison 11 relie le raccord 32 du moteur 3 attelé à la roue avant gauche au raccord 41B du moteur 4B attelé à la roue arrière gauche. Des conduits 12A, 12B, branchés sur les raccords 42A, 42B des moteurs 4A, 4B, respectivement, sont raccordés à des conduits 13, eux-mêmes reliés par un conduit 14 au raccord 52 de la pompe 5.

Il doit être noté que l'engin est muni soit de roues 1 et 2, comme dans l'exemple décrit, soit, d'une manière plus générale, d'organes de déplacement avant 1 et arrière 2, constitués par des roues, des chenilles, ou analogues. Les cylindrées C3 et C4B sont de manière très générale porportionnelles et choisies de manière qu'alimentés par des débits de fluide de valeurs égales, les moteurs 3, 4B entraînent les organes de déplacement 1, 2, à des vitesses linéaires égales.

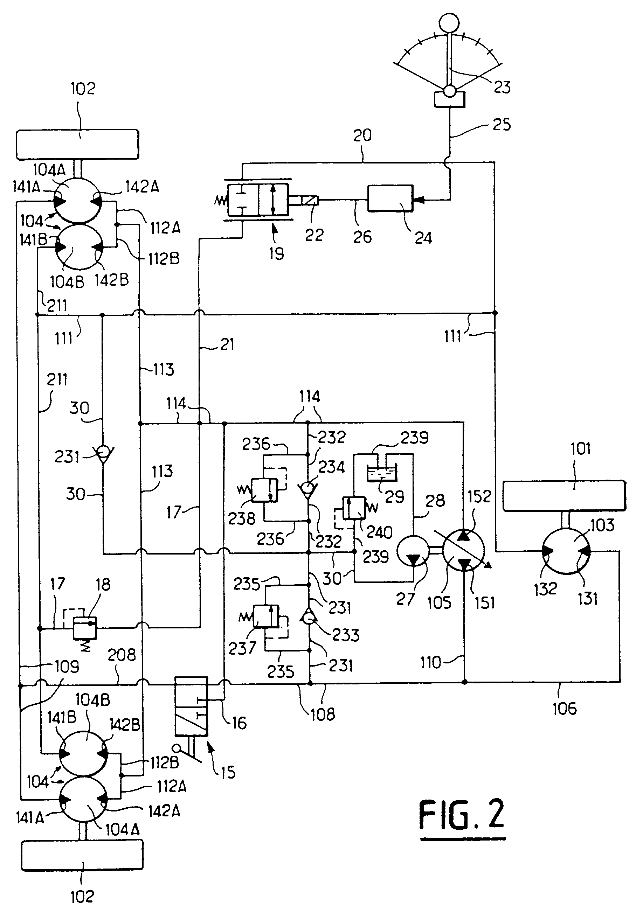

Le circuit de la figure 2 se rapporte à un engin à trois roues ou groupes de roues, plus généralement à trois groupes d'organes de déplacement : une roue avant 101, et, deux roues arrière 102 droite et gauche. Un moteur hydraulique 103, de cylindrée C103, est attelé à la roue avant 101 et comporte deux raccords principaux 131, 132. Des groupes de moteurs hydrauliques 104 sont attelés aux roues arrière 102 et comportent chacun un moteur 104A, de cylindrée C104A, et un moteur 104B de cylindrée C104B. Les cylindrées C103 et C104B sont proportionnelles et choisies de manière qu'alimentés par des débits de fluide égaux, les moteurs 103 d'une part, les moteurs 104B d'autre part, pris ensemble, entraînent les organes de déplacement 101, 102 à des vitesses linéaires égales. Dans l'exemple décrit, en supposant que les roues 101 et 102 ont des circonférences égales, les cylindrées C103 et 2xC104B sont égales :

C 103 = (C 104 B) x 2

Les moteurs sont réversibles et sont munis de deux raccords principaux : 131, 132 du moteur 103 ; 141A, 142A des moteurs 104A ; et 141B, 142B des moteurs 104B.

L'alimentation en fluide sous pression des divers moteurs est réalisée par une pompe à débit variable 105, munie également de deux raccords principaux 151, 152. Un conduit 106 relie le raccord 131 du moteur 103, à un conduit 110, relié lui-même au raccord 151 de ladite pompe. Un conduit 208 relie un conduit 109 raccordé au raccord 141A de chaque moteur 104A à un distributeur 15 à deux positions, un conduit 108 reliant par ailleurs ledit distributeur 15 à deux positions au conduit 110. Un conduit de liaison 111 relie le raccord 132 du moteur 103 attelé à la roue avant, à deux conduits 211, eux-mêmes branchés sur les raccords 141B des moteurs 104B. Des conduits 112A, 112B, branchés sur les raccords 142A, 142B des moteurs 104A, 104B, respectivement, sont raccordés à des conduits 113, eux-mêmes reliés par un conduit 114 au raccord 152 de la pompe 105.

Un conduit 16 relie le conduit 114 au distributeur 15 à deux positions. Un conduit 17 relie l'un quelconque des conduits 211 au conduit 114, un clapet de décharge 18 étant placé sur ce conduit 17.

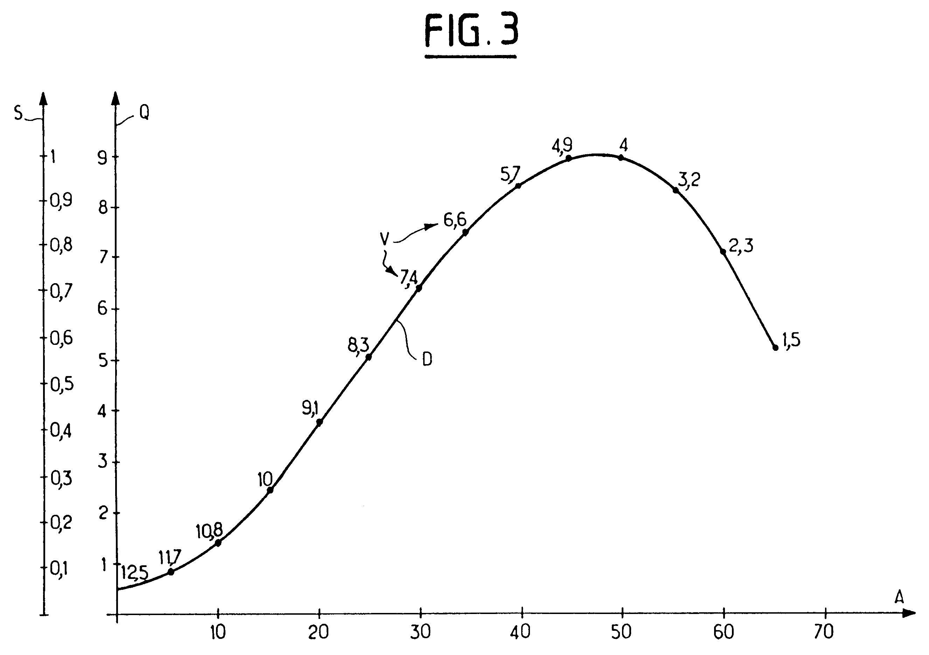

Un distributeur 19 à ouverture progressive est également prévu, est relié par des conduits 20, 21 aux conduits 111, 114, respectivement, et est muni d'un organe 22 de réglage de sa position. L'engin possède une commande 23 de l'orientation de la roue 101, directrice, qui est reliée (25) à un dispositif 24 de commande de l'organe de réglage 22, ce dispositif 24 établissant la correspondance, par exemple suivant la courbe D de la figure 3, entre l'angle A de braquage de la roue avant 101 et la section de passage S du distributeur à ouverture progressive 19, et aussi, le débit Q devant traverser ledit distributeur à ouverture progressive 19. La sortie du dispositif 24 est reliée (26) à l'organe de réglage 22. Sur la courbe D, des valeurs V peuvent être repérées et correspondent à la vitesse de déplacement de l'engin. Dans le graphique de la figure 3, les unités utilisées sont : les degrés pour l'angle A ; les millimètres carrés pour S ; les litres par minute pour Q ; et les kilomètres/heure pour V.

Une pompe de gavage 27 est reliée par son conduit d'aspiration 28 à un réservoir de fluide 29 et par son conduit de refoulement 30 au conduit 111. Un clapet de non retour 231 est placé sur le conduit 30 et permet le passage du fluide de la pompe de gavage 27 vers le conduit 111. Des conduits 231, 232 relient le conduit 30 aux conduits 108, 114, des clapets de non retour 233, 234 étant placés sur les conduits 231, 232, et permettent le passage du fluide du conduit 30 vers les conduits 108, 114, respectivement. Des conduits 235, 236 sont raccordés aux conduits 231, 232, de part et d'autre des clapets de non retour 233, 234, respectivement. Des clapets de décharge 237, 238 sont placés sur ces conduits 235, 236 et permettent le passage éventuel des fluides vers le conduit 30. Enfin, un conduit 239 relie la partie du conduit 30 comprise entre la pompe de gavage 27 et le clapet de non retour 231 au réservoir 29, un clapet de décharge 240 étant placé sur le conduit 239 et permettant le passage éventuel du fluide vers le réservoir 29.

Les deux positions du distributeur 15 correspondent :
- la première position, à la mise en communication des conduits 108 et 208, et, à l'obturation du conduit 16 ; et,
- la deuxième position, à la mise en communication des conduits 16 et 208, et, à l'obturation du conduit 108.

Par ailleurs, lorsque l'engin se déplace en ligne droite, le distributeur 19 à ouverture progressive isole le conduit 20 du conduit 21. Par contre, lorsque l'utilisateur de l'engin agit sur la commande 23 de l'orientation des roues directrices et qu'alors l'engin se déplace en virage vers la droite, ou, vers la gauche, il devient nécessaire de procéder soit à l'admission dans les conduits 111 et 211 d'une quantité complémentaire de fluide, soit au contraire au retrait d'une telle quantité. Ceci est permis par l'ouverture du distributeur 19 à ouverture progressive qui, en réponse à l'impulsion reçue par son organe de réglage 22, provenant du dispositif 24, établit la communication entre lesdits conduits 20 et 21.

Il y a lieu de noter que cette mise en communication est progressive, la section S du passage du fluide à l'intérieur du distributeur 19 à ouverture progressive, entre les conduits 20 et 21, ayant une valeur variable, fonction de la valeur de l'angle de braquage A. La loi de correspondance entre la section S, qui est la section réduite d'une restriction hydraulique, et l'angle A est établie par le calcul, classique, définissant ladite quantité complémentaire de fluide, et est vérifiée par l'observation du fonctionnement réel de l'engin. Cette correspondance ne fait pas partie de l'invention proprement dite et est connue dans le domaine des transmissions hydrauliques.

Le fonctionnement des engins décrits est le suivant.

Une remarque préliminaire consiste tout d'abord à observer les dispositions suivantes :
- il est admis que la marche avant de l'engin de la figure 1 correspond au refoulement du fluide sous pression par la pompe 5 dans le conduit 10, puis dans les conduits 6, 7, 8 et 9, le refoulement de la pompe 5 dans le conduit 14 permettant, bien entendu, l'obtention de la marche arrière ;
- de manière analogue, la marche avant de l'engin de la figure 2 correspond au refoulement du fluide sous pression par la pompe 105 dans les conduits 110, 106 et 108, le refoulement de cette pompe dans le conduit 114 permettant l'obtention de la marche arrière ;
- l'exposé du fonctionnement défini ci-après est réalisé en supposant l'engin se déplaçant en marche avant.

La pompe 5 de l'engin de la figure 1 refoule donc le fluide sous pression dans les conduits 10, 6, 7, 8 et 9. Les moteurs avant 3 et arrière 4A sont alimentés en parallèle. Le fluide, qui s'échappe des moteurs avant 3 par les raccords 32, sert à alimenter les moteurs 4B. Il y a lieu de noter qu'existe une synchronisation exacte des rotations, pour chaque côté de l'engin, droit, ou gauche, du moteur avant 3 et du moteur arrière 4B, dont les cylindrées ont été choisies pour obtenir des vitesses linéaires égales des roues 1 et 2 correspondantes, étant observé que le débit de fluide d'échappement du moteur avant 3, qui est égal au débit d'alimentation du même moteur, constitue le débit d'alimentation du moteur arrière 4B, grâce au conduit de liaison 11, qui relie le raccord d'échappement 32 du moteur avant 3 au raccord d'admission 41B du moteur arrière 4B.

Cette synchronisation des rotations des moteurs avant 3 et arrière 4B évite l'emballement de l'un ou de l'autre attelé à une roue n'adhérant éventuellement plus au sol ; évite donc l'immobilisation de l'engin par dissipation du fluide refoulé par la pompe 5 dans ledit moteur attelé à une roue momentanément sans adhérence ; et réalise bien entendu la synchronisation des rotations des roues avant 1 et arrière 2.

Aucune valve d'antipatinage n'a été nécessaire pour obtenir ce résultat.

Fondamentalement, le circuit de la figure 2 possède le même fonctionnement de base.

En supposant d'abord le distributeur 15 placé dans sa première position, et, l'engin se déplaçant en ligne droite avec interruption de la communication des conduits 20, 21 par le distributeur 19 à ouverture progressive, on constate bien que le fluide qui s'échappe du moteur avant 103 à travers le raccord 132, alimente en parallèle les moteurs arrière 104B. Là encore, le conduit de liaison 111-211 réalise la synchronisation des rotations des moteurs 103 et 104B, et, des roues avant 101 et arrière 102 qui y sont attelées.

La pompe principale 105 étant à débit variable, il est nécessaire, de manière classique, de prévoir le gavage éventuel des conduits, soit d'alimentation 106, 108, 208, 109 des moteurs avant 103 et arrière 104A, soit d'échappement 112A-112B-113-114 du fluide hors des moteurs arrière 104A et 104B, et de prévoir également la protection contre les surpressions dans ces conduits. La pompe de gavage 27, les conduits 30, 231, 232 et les clapets de non retour 233, 234, ainsi que les conduits 235, 236 et les clapets de décharge 237, 238, permettent de réaliser ce gavage et cette protection contre les surpressions.

De manière analogue le conduit 30 et le clapet de non retour 231 d'une part, le conduit 17 et le clapet de décharge 18 d'autre part, réalisent le gavage et la protection contre les surpressions en ce qui concerne le fluide contenu dans les conduits 111 et 211, qui constituent le conduit de liaison reliant le raccord 132 aux raccords 141B.

Le fonctionnement du distributeur 19 à ouverture progressive a déjà été vu.

Reste à montrer l'intérêt du distributeur à deux positions 15, non indispensable, mais qu'il est cependant avantageux d'adopter.

Lorsque l'engin est utilisé sur le lieu de la fonction principale pour laquelle il a été conçu, le distributeur à deux positions 15 est placé dans sa première position et permet l'obtention du fonctionnement qui vient d'être décrit, avec répartition en parallèle du débit refoulé par la pompe 105 dans les raccords d'admission 131 du moteur avant 103 et 141A des moteurs arrière 104A. Les couples d'entraînement des roues sont importants avec obtention d'une vitesse déterminée.

Par contre, lors des déplacements sur route de l'engin, entre deux emplacements de chantiers, le couple nécessaire est inférieur à celui des déplacements sur les chantiers, mais l'utilisateur apprécierait en revanche l'obtention d'une vitesse de déplacement supérieure à celle des chantiers.

Lorsque l'engin est muni, comme celui de la figure 2, d'un distributeur à deux positions 15, l'utilisateur, en plaçant ce distributeur 15 dans sa deuxième position, obtient le fonctionnement escompté. En effet, dans cette configuration, les raccords 141A et 142A des moteurs arrière 104A sont mis en communication par l'intermédiaire des conduits 109, 208, du distributeur à deux positions 15, et des conduits 16, 114, 113 et 112A. Les moteurs arrière 104A sont "en court-circuit", non alimentés par le fluide refoulé par la pompe 105, qui est alors intégralement dirigé vers le moteur avant 103. Pour un débit de refoulement déterminé de la pompe 105, ce moteur avant 103, et la roue avant 101 qui y est attelée tournent à une vitesse de rotation supérieure à ladite vitesse de rotation déterminée obtenue lorsque le distributeur à deux positions 15 était dans sa première position. L'engin avance plus vite, avec un couple d'entrainement inférieur (le couple des moteurs arrière 104A, "en court-circuit", est nul).

L'invention n'est pas limitée aux réalisations décrites, mais en couvre au contraire toutes les variantes qui pourraient leur être apportées sans sortir du cadre des revendications.

**Revendications**

1. Engin mobile comportant un groupe d'organes de déplacement avant (1; 101) et un groupe d'organes de déplacement arrière (2; 102), les organes de déplacements de chaque groupe étant attelés à des groupes de moteurs hydrauliques avant (3; 103) et arrière (4A-4B; 104A-104B) , respectivement, qui sont munis de premiers raccords principaux (31; 41A-41B) et de deuxièmes raccords principaux (32;

42A-42B) et qui sont reliés à une pompe principale (5; 105), cependant que le groupe des moteurs hydrauliques arrière possède des première (4A; 104A) et deuxième (4B; 104B) cylindrées séparées; que les premiers raccords principaux (31, 41A; 131, 141A) du groupe des moteurs hydrauliques avant et de la première cylindrée du groupe des moteurs hydrauliques arrière sont raccordés en parallèle depuis la pompe principale par des premiers tronçons (6-7-8-9; 106-108-208-109) de conduit d'alimentation, eux-mêmes reliés (10; 110) à la pompe principale (5; 105); et que la cylindrée (C3; C103) du groupe des moteurs hydrauliques avant (3; 103) est susceptible d'entraîner les organes de déplacement avant (1; 101) à une vitesse linéaire égale à celle d'entraînement des organes de déplacement arrière (2; 102) par la deuxième cylindrée (C4B; C104B) du groupe des moteurs hydrauliques arrière;

caractérisé en ce que le premier raccord principal (41B; 141B) de la deuxième cylindrée (4B; 104B) du groupe des moteurs hydrauliques arrière est séparé de celui (41A; 141A) de la première cylindrée (4A; 104A) du groupe de moteurs hydrauliques arrière et est relié, par un conduit de liaison (11; 111-211), au deuxième raccord principal (32; 132) du groupe des moteurs hydrauliques avant, et en ce que le premier raccord principal (41A; 141A) de la première cylindrée (4A; 104A) du groupe des moteurs hydrauliques arrière est directement relié à la pompe principale (5; 105) sans qu'une cylindrée (C3; C103) du groupe des moteurs hydrauliques avant ne soit raccordée en série entre la pompe principale et la première cylindrée du groupe des moteurs hydrauliques arrière.

2. Engin selon la revendication 1,
caractérisé en ce qu'un distributeur à deux positions (15) est placé sur le premier tronçon de conduit d'alimentation (108-208) de la première cylindrée (104A) du groupe des moteurs hydrauliques arrière, et, dans sa première position, établit la continuité dudit premier tronçon de conduit d'alimentation, interrompant dans sa deuxième position la continuité dudit premier tronçon de conduit d'alimentation.

3. Engin selon la revendication 2,
caractérisé en ce qu'il comporte un conduit d'échappement (112A-112B-113-114) relié aux deuxièmes raccords principaux (142A-142B) du groupe des moteurs hydrauliques arrière et un conduit de dérivation (16) reliant le conduit d'échappement audit distributeur à deux positions (15), qui, dans sa première position obture ledit conduit de dérivation, et qui, dans sa deuxième position met en communication le conduit de dérivation avec la partie (208) du premier tronçon (108-208) de conduit d'alimentation qui est communication permanente (109) avec le premier raccord principal (141A) de la première cylindrée (104A) du groupe des moteurs hydrauliques arrière.

4. Engin selon l'une quelconque des revendications 1 à 3,
caractérisé en ce qu'il comporte une source de fluide de gavage (27), à laquelle est relié, par un conduit de gavage (30), le conduit de liaison (111-211), un clapet de non retour (231) étant placé sur le conduit de gavage et permettant le passage d'un fluide de la source de fluide de gavage vers le conduit de liaison, et, un conduit d'échappement (113-114) relié (112A-112B) aux deuxièmes raccords principaux (142A-142B) des première (104A) et deuxième (104B) cylindrées du groupe des moteurs hydrauliques arrière, auquel est raccordé un conduit de décharge (17) raccordé par ailleurs audit conduit de liaison (211-111), cependant qu'un clapet de décharge (18) de protection contre les surpressions est placé sur ledit conduit de décharge (17).

5. Engin selon l'une quelconque des revendications 1 à 4,
caractérisé en ce qu'il comporte un conduit d'échappement (113-114) relié (112A-112B) aux deuxièmes raccords principaux (142A-142B) du groupe des moteurs hydrauliques arrière, une commande de direction (23) et un conduit d'équilibrage (20-21) qui relie le conduit de liaison (111-211) au conduit d'échappement (113-114), cependant qu'un distributeur à ouverture progressive (19) est placé sur ce conduit d'équilibrage, est placé normalement dans une première position dans laquelle il interrompt la continuité dudit conduit d'équilibrage, et est muni d'un dispositif (22) de réglage de sa position, qui est attelé (26-24-25) à la commande de direction (23), celle-ci commandant l'ouverture progressive dudit distributeur à ouverture progressive (19), de manière, lors d'un virage de l'engin, à permettre le passage contrôlé de fluide en provenance de, ou vers le conduit de liaison (111-211).

## Claims

1. Mobile vehicle comprising a group of front displacement members (1; 101) and a group of rear displacement members (2; 102), the displacement members in each group being coupled to respective groups of front hydraulic motors (3, 103) and rear hydraulic motors (4A-4B; 104A-104B), which are provided with first principal couplings (31; 41A-41B) and with second principal couplings (32; 42A-42B) and which are connected to a principal pump (5; 105), while the group of rear hydraulic motors presents first (4A, 104A) and second (4B; 104B) distinct cylinder capacities; the first principal couplings (31, 41A; 131, 141A) of the group of front hydraulic motors and of the first cylinder capacity of the group of rear hydraulic motors are connected in parallel from the principal pump by first lengths (6-7-8-9; 106-108-208-109) of feed duct, themselves connected (10; 110) to the principal pump (5, 105); and the cylinder capacity (C3; C103) of the group of front hydraulic motors (3, 103) is capable of driving the front displacement members (1; 101) at a linear speed equal to that of drive of the rear displacement members (2; 102) by the second cylinder capacity (C4B; C104B) of the group of rear hydraulic motors; characterized in that the first principal coupling (41B; 141B) of the second cylinder capacity (4B; 104B) of the group of rear hydraulic motors is separated from that (41A; 141A) of the first cylinder capacity (4A; 104A) of the group of rear hydraulic motors and is connected, by a link duct (11, 111-211), to the second principal coupling (32; 132) of the group of front hydraulic motors, and in that the first principal coupling (41A; 141A) of the first cylinder capacity (4A; 104A) of the group of rear hydraulic motors is directly connected to the principal pump (5; 105) without a cylinder capacity (C3; C103) of the group of front hydraulic motors being connected in series between the principal pump and the first cylinder capacity of the group of rear hydraulic motors.

2. Vehicle according to Claim 1,
characterized in that a two-position distributor valve (15) is placed on the first length of feed duct (108-208) of the first cylinder capacity (104A) of the group of rear hydraulic motors, and, in its first position, establishes continuity of said first length of the feed duct, interrupting in its second position the continuity of said first length of feed duct.

3. Vehicle according to Claim 2,
characterized in that it comprises an exhaust duct (112A-112B-113-114) connected to the second principal couplings (142A-142B) of the group of rear hydraulic motors and a parallel duct (16) connecting the exhaust duct to said two-position distributor valve (15), which, in its first position, closes said parallel duct, and which, in its second position, places in communication the parallel duct with the portion (208) of the first length (108-208) of feed duct which is in permanent communication (109) with the first principal coupling (141A) of the first cylinder capacity (104A) of the group of rear hydraulic motors.

4. Vehicle according to any one of Claims 1 to 3,
characterized in that it comprises a source of booster fluid (27) to which is connected, via a booster duct (30), the link duct (111-211), a non-return valve (231) being placed on the booster duct and allowing passage of a fluid from the source of booster fluid towards the link duct, and an exhaust duct (113-114) connected (112A-112B) to the second principal couplings (142A-142B) of the first (104A) and second (104B) cylinder capacities of the group of rear hydraulic motors, to which is connected a discharge conduit (17) also connected to said link duct (211-111), while a discharge valve (18) for providing protection against excess pressures is placed on said discharge duct (17).

5. Vehicle according to any one, of Claims 1 to 4,
characterized in that it comprises an exhaust duct (113-114) connected (112A-112B) to the second principal couplings (142A-142B) of the group of rear hydraulic motors, a steering control (23) and a balancing duct (20-21) which connects the link duct (111-211) to the exhaust duct (113-114), while a progressively-opening distributor valve (19) is placed on this balancing duct, is normally placed in a first position in which it interrupts the continuity of said balancing duct, and is provided with a position-adjusting device (22), which is coupled (26-24-25) to the steering control (23), the latter controlling the progressive opening of said progressively-opening distributor valve (19), so as, when the vehicle is taking a bend, to allow controlled passage of fluid coming from or going towards the link duct (111-211).

**Patentansprüche**

1. Mobiles Gerät mit einer Gruppe von vorderen Bewegungsorganen (1; 101) und einer Gruppe von hinteren Bewegungsorganen (2; 102), wobei die Bewegungsorgane einer jeden Gruppe an Gruppen von vorderen Hydraulikmotoren (3; 103) bzw. hinteren Hydraulikmotoren (4A-4B; 104A-104B) angehängt sind, die mit ersten Hauptverbindungen (31; 41A-41B) und zweiten Hauptverbindungen (32; 42A-42B) versehen sind, und die mit einer Hauptpumpe (5; 105) verbunden sind, während die hintere Gruppe von Hydraulikmotoren einen ersten (4A; 104A) und einen zweiten (4B; 104B) Hubraum aufweist, die voneinander getrennt sind; wobei die ersten Hauptverbindungen (31, 41A; 131, 141A) der vorderen Gruppe der Hydraulikmotoren und des ersten Hubraums der hinteren Gruppe der Hydraulikmotoren parallel ausgehend von der Hauptpumpe durch erste Stücke (6-7-8-9; 106-108-208-109) der Zuführleitung verbunden sind, wobei diese selbst (10; 110) mit der Hauptpumpe (5; 105) verbunden sind, und wobei der Hubraum (C3; C103) der vorderen Gruppe der Hydraulikmotoren (3; 103) geeignet ist, die vorderen Bewegungsorgane (1; 101) mit einer linearen Geschwindigkeit anzutreiben, die gleich jener Antriebsgeschwindigkeit der hinteren Bewegungsorgane (2; 102) durch den zweiten Hubraum (C4B; C104B) der hinteren Gruppe der Hydraulikmotoren ist; dadurch gekennzeichnet, daß die erste Hauptverbindung (41B; 141B) des zweiten Hubraums (4B; 104B) der hinteren Gruppe der Hydraulikmotoren von jener (41A; 141A) des ersten Hubraums ((4A; 104A) der hinteren Gruppe von Hydraulikmotoren getrennt ist und durch eine Verbindungsleitung (11; 111-211) mit der zweiten Hauptverbindung (32; 132) der vorderen Gruppe der Hydraulikmotoren verbunden ist, und daß die erste Hauptverbindung (41A; 141A) des ersten Hubraums (4A; 104A) der hinteren Gruppe der Hydraulikmotoren direkt mit der Hauptpumpe (5; 105) verbunden ist, ohne daß ein Hubraum (C3; C103) der vorderen Gruppe von Hydraulikmotoren in Reihe zwischen der Hauptpumpe und dem ersten Hubraum der hinteren Gruppe der Hydraulikmotoren verbunden ist.

2.  Gerät nach Anspruch 1, dadurch gekennzeichnet, daß ein Zweistellungsverteiler (15) an dem ersten Stück der Zuführleitung (108-208) des ersten Hubraums (104A) der hinteren Gruppe der Hydraulikmotoren angeordnet ist, und, in seiner ersten Stellung, die Kontinuität bzw. den Durchlaß des ersten Stücks der Zuführleitung herstellt, und in seiner zweiten Stellung die Kontinuität bzw. den Durchlaß des ersten Stücks der Zuführleitung unterbricht.

3.  Gerät nach Anspruch 2, dadurch gekennzeichnet, daß es eine Ausflußleitung (112A-112B-113-114) aufweist, die mit den zweiten Hauptverbindungen (142A-142B) der hinteren Gruppe der Hydraulikmotoren verbunden ist, und eine Umgehungsleitung (16) aufweist, die die Ausflußleitung mit dem Zweistellungsverteiler (15) verbindet, der in seiner ersten Stellung die Umgehungsleitung schließt, und der, in seiner zweiten Stellung, die Umgehungsleitung mit dem Abschnitt (208) des ersten Stücks (108-208) der Zuführleitung verbindet, die in ständiger Verbindung (109) mit der ersten Hauptverbindung (104A) des ersten Hubraums (104A) der hinteren Gruppe der Hydraulikmotoren steht.

4.  Gerät nach einem der Ansprüche 1 bis 3, dadurch gekennzeichnet, daß es eine Überlaufflüssigkeitsquelle (27) aufweist mit der, durch eine Überlaufleitung (30), die Verbindungsleitung (111-211) verbunden ist, wobei eine Einwegklappe (231) an der Überlaufleitung angeordnet ist und den Hindurchtritt eines Fluids von der Überlauffluidquelle zu der Verbindungsleitung erlaubt, und eine Abflußleitung (113-114), die (112A-112B) mit den zweiten Hauptverbindungen (142A-142B) der ersten (104A) und der zweiten (104B) Hubräume der hinteren Gruppe der Hydraulikmotoren verbunden ist, mit der eine Ablaßleitung (17) verbunden ist, die darüber hinaus mit der Verbindungsleitung (221-111) verbunden ist, während eine Ablaßklappe (18) des Schutzes gegen Überdrücke an der Ablaßleitung (17) angeordnet ist.

5.  Gerät nach einem der Ansprüche 1 bis 4, dadurch gekennzeichnet, daß es eine Ausflußleitung (113-114), die (112A-112B) mit den zweiten Hauptverbindungen (142-142B) der hinteren Gruppe der Hydraulikmotoren verbunden ist, eine Richtungssteuerung (23) und eine Ausgleichsleitung (20-21) aufweist, die die Verbindungsleitung (111-211) mit der Ausflußleitung (113-114) verbindet, während ein Verteiler mit zunehmender Öffnung (19), der an der Ausgleichsleitung angeordnet ist, normalerweise in eine erste Position gesetzt ist, in der er die Kontinuität bzw. den Durchfluß der Ausgleichsleitung unterbricht, und mit einer Einstellvorrichtung (22) seiner Position versehen ist, die (26-24-25) mit der Richtungssteuerung (23) verbunden ist, welche die zunehmende Öffnung des Verteilers mit zunehmender Öffnung (19) steuert, derart, daß bei einer Kurve des Geräts der kontrollierte Durchfluß des Fluids, von der Verbindungsleitung (111-211) kommend oder zu ihr hinführend, ermöglicht wird.

FIG. 1

FIG. 2

# FIG. 3

EP 0 547 947 B1